# EUROPEAN PATENT APPLICATION

(11) **EP 4 372 936 A1**
(43) Date of publication of application: **22.05.2024**
(21) Application number: 21950088.1
(22) Date of filing: 13.07.2021
(51) Int. Cl.: H02H 3/28

(54) **PROTECTION CONTROL MONITORING SYSTEM AND PROTECTION CONTROL MONITORING DEVICE**

(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: KAWASAKI, Tomoyuki, Kawasaki-shi, Kanagawa 212-0013 (JP); YANAGIHASHI, Yusuke, Kawasaki-shi, Kanagawa 212-0013 (JP); SONOBE, Yasutaka, Kawasaki-shi, Kanagawa 212-0013 (JP)
(74) Representative: Marks & Clerk LLP
(86) International application number: PCT/JP2021/026230
(87) International publication number: WO 2023/286145

(57) **Abstract**

Provided is a protection control monitoring system, including: a first protection control monitoring device including a measurement unit that measures a timing of receiving data transmitted from a communication partner, and an adjustment unit that adjusts a transmission timing for transmitting data to the communication partner; and a second protection control monitoring device including a measurement unit that measures a timing of receiving data transmitted from a communication partner, and a correction unit that corrects a sampling timing of data, in which the adjustment unit of the first protection control monitoring device adjusts the transmission timing based on a time difference between the timing of receiving data transmitted from the second protection control monitoring device, which is measured by the measurement unit of the first protection control monitoring device, and a timing of receiving data transmitted from the first protection control monitoring device by the second protection control monitoring device, which is expected by the first protection control monitoring device, and in which the correction unit of the second protection control monitoring device corrects the sampling timing after the adjustment unit of the first protection control monitoring device has adjusted the transmission timing, to achieve sampling synchronization between the first protection control monitoring device and the second protection control monitoring device.

## Description

### [Technical Field]

An embodiment of the present invention relates to a protection control monitoring system and a protection control monitoring device.

### [Background Art]

In the related art, a transmission line differential relay is known to perform differential operations using terminals installed at both ends of the transmission line to protect the transmission line. To perform differential operations, synchronization of sampling for acquiring the current value of the transmission line between terminals is crucial. In a typical transmission line differential relay, one terminal notifies the other terminal of the timing for receiving data through the transmission path, and the other terminal performs synchronization control based on the notified reception timing and the data reception timing at its own terminal. However, in cases where a pilot wire is used as the transmission path for the transmission line, there are limitations on the data transmission capacity in the transmission path, leading to difficulties in properly notifying the other terminal of the data reception timing in some cases. As a result, in transmission paths with limited data transmission capacity, it is difficult to perform sampling synchronization in some cases.

### [Prior art Literature]

### [Patent Literature]

[Patent Literature 1]
Japanese Patent Publication No. 2013-187994

### [Summary of Invention]

### [Issue to be solved by Invention]

The issue to be solved by the present invention is to provide a protection control monitoring system and a protection control monitoring device that are capable of performing sampling synchronization even in transmission paths with limited data transmission capacity.

### [Solution to the Issue]

A protection control monitoring system includes a first protection control monitoring device including a measurement unit that measures a timing of receiving data transmitted from a communication partner, and an adjustment unit that adjusts a transmission timing for transmitting data to the communication partner, and a second protection control monitoring device including a measurement unit that measures a timing of receiving data transmitted from a communication partner, and a correction unit that corrects a sampling timing of data. The adjustment unit of the first protection control monitoring device adjusts the transmission timing based on a time difference between the timing of receiving data transmitted from the second protection control monitoring device, which is measured by the measurement unit of the first protection control monitoring device, and a timing of receiving data transmitted from the first protection control monitoring device by the second protection control monitoring device, which is expected by the first protection control monitoring device. The correction unit of the second protection control monitoring device corrects the sampling timing after the adjustment unit of the first protection control monitoring device has adjusted the transmission timing, to achieve sampling synchronization between the first protection control monitoring device and the second protection control monitoring device.

### [Brief Description of Drawings]

FIG. 1 is a configuration diagram of a protection control monitoring system 1 according to a first embodiment.
FIG. 2 is a diagram illustrating an example of a flow of operations of a transmission timing control means 58A and a sampling synchronization means 56B in a case where an expected transmission delay time Tdly_exp is longer than an actual transmission delay time Tdly.
FIG. 3 is a diagram illustrating an example of a flow of operations of the transmission timing control means 58A and the sampling synchronization means 56B in a case where the expected transmission delay time Tdly_exp is shorter than the actual transmission delay time Tdly.
FIG. 4 is a timing chart illustrating an example of a flow of processing to be executed by the first protection control monitoring device 100A and the second protection control monitoring device 100B in the first embodiment.
FIG. 5 is a timing chart illustrating an example of a flow of processing to be executed by the first protection control monitoring device 100A and the second protection control monitoring device 100B in a second embodiment.
FIG. 6 is a configuration diagram of a protection control monitoring system 2 according to a third embodiment.
FIG. 7 is a diagram illustrating an example of a flow of operations of the transmission timing control means 58A and the sampling synchronization means 56B in a case where an upstream transmission delay time Td_up is longer than a downstream transmission delay time Td_down.
FIG. 8 is a diagram illustrating an example of a flow of operations of the transmission timing control means 58A and the sampling synchronization means 56B in a case where the upstream transmission delay time Td_up is shorter than the downstream transmission delay time Td_down.
FIG. 9 is diagram for describing a method of achieving sampling synchronization by correcting reception timing information to be notified to the second protection control monitoring device 100B by the first protection control monitoring device 100A.
FIG. 10 is a configuration diagram of a protection control monitoring system 3 according to an eight embodiment.

### [Description of Embodiments]

Embodiments of a protection control monitoring system and a protection control monitoring device will be described below with reference to the drawings.

### (First Embodiment)

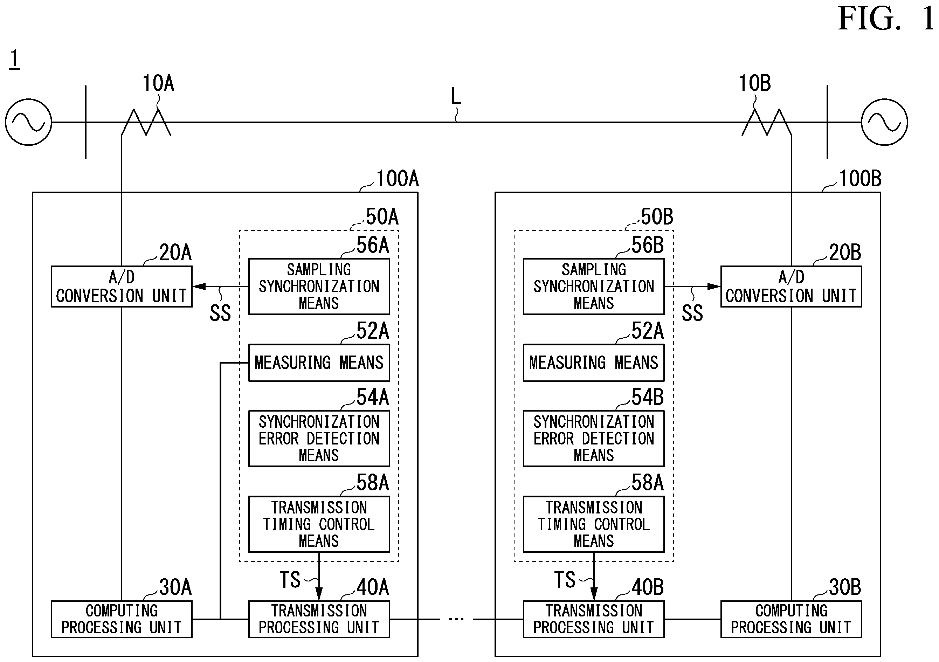

FIG. 1 is a configuration diagram of a protection control monitoring system 1 according to a first embodiment. The protection control monitoring system 1 includes a first protection control monitoring device 100A connected to one end of a transmission line L, and a second protection control monitoring device 100B connected to the other end of the transmission line L (in the following description, when not distinguishing between the first protection control monitoring device 100A and the second protection control monitoring device 100B, they may be simply referred to as "protection control monitoring device 100"). The first protection control monitoring device 100A includes a current transformer 10A, an A/D conversion unit 20A, a computing processing unit 30A, a transmission processing unit 40A, a measuring means 52A, a synchronization error detection means 54A, a sampling synchronization means 56A, and a transmission timing control means 58A. The second protection control monitoring device 100B includes a current transformer 10B, an A/D conversion unit 20B, a computing processing unit 30B, a transmission processing unit 40B, a measuring means 52B, a synchronization error detection means 54B, a sampling synchronization means 56B, and a transmission timing control means 58B. The configuration including the measuring means 52A, the synchronization error detection means 54A, the sampling synchronization means 56A, and the transmission timing control means 58A corresponds to a sampling synchronization control unit 50A, while the configuration including the measuring means 52B, the synchronization error detection means 54B, the sampling synchronization means 56B, and the transmission timing control means 58B corresponds to a sampling synchronization control unit 50B.
In the following description, when not distinguishing between the components of the first protection control monitoring device 100A and the second protection control monitoring device 100B, the symbols A or B may be omitted.

The current transformer 10 converts a high current flowing through the transmission line L into a low current, measures an analog current value, and transfers it to the A/D conversion unit 20. The A/D conversion unit 20 samples the analog current value obtained from the current transformer 10 and converts it into digital data. The computing processing unit 30 performs protective operations based on the digital data acquired from the A/D conversion unit 20, and transfers the digital data to the other protection control monitoring device 100 through the transmission processing unit 40. In the event that the computing processing unit 30 detects an anomaly in the transmission line L based on the results of the protective operations, the computing processing unit 30 transmits an interruption signal to an circuit breaker (not shown) connected to the transmission line L, to thereby interrupt the current flowing through the transmission line L.

The sampling synchronization control unit 50 measures the arrival timing of data transmitted from the other protection control monitoring device 100, applies a predefined process, and transfers a sampling signal SS indicating a sampling timing to the A/D conversion unit 20A or transfers a transmission timing signal TS indicating a transmission timing of data to the transmission processing unit 40, to achieve sampling synchronization.

More specifically, the measuring means 52 measures a difference Td_rx between a timing based on the sampling signal SS of the own terminal, which is the protection control monitoring device 100, and a timing when data arrives from the other protection control monitoring device 100. Here, the timing difference Td_rx is expressed as the sum of a transmission standby time TXst, which is the time elapsed from when the own terminal, which is the protection control monitoring device 100, performs sampling until it transmits the acquired sampling data to the other protection control monitoring device 100, and a time Tdly (transmission delay time) from when the own terminal, which is the protection control monitoring device 100, transmits the acquired sampling data to the other protection control monitoring device 100 until sampling data from the other protection control monitoring device 100 arrives. In other words, Td_rx=TXst+Tdly holds true.

The synchronization error detection means 54 calculates a difference Tdif (Td_rx-Td_rx0) between the timing difference Td_rx measured by the measuring means 52 and the timing difference Td_rx0 that the own terminal, which is the protection control monitoring device 100, expects for the transmission path in advance, and detects this difference Tdif as the synchronization error. Here, the timing difference Td_rx0, which is expected in advance, is expressed as the sum of the transmission standby time TXst and the expected time Tdly_exp (expected transmission delay time), which is period from when the own terminal, which is the protection control monitoring device 100, transmits the acquired data to the other protection control monitoring device 100 until data from the other protection control monitoring device 100 arrives. In other words, Td_rx0=TXst+Tdly_exp holds true, and Tdif=Tdly_exp-Tdly is obtained. In the first embodiment, it is assumed that the transmission delay time Tdly and the expected transmission delay time Tdly_exp between the first protection control monitoring device 100A and the second protection control monitoring device 100B are the same for both the uplink and downlink. This assumption applies, for example, when the first protection control monitoring device 100A and the second protection control monitoring device 100B are directly connected to each other without using a relay device.

The sampling synchronization means 56 outputs to the A/D conversion unit 20 a sampling signal SS indicating a sampling timing SP that resolves the synchronization error Tdiff detected by the synchronization error detection means 54. More specifically, when the synchronization error Tdiff=Tdly_exp-Tdly is positive, indicating that the actual transmission delay time Tdly is shorter than the expected transmission delay time Tdly_exp, the sampling synchronization means 56 outputs a sampling signal SS that delays the sampling timing SP by the corresponding period of the synchronization error Tdiff. On the other hand, when the synchronization error Tdiff=Tdly_exp-Tdly is negative, indicating that the actual transmission delay time Tdly is longer than the expected transmission delay time Tdly_exp, the sampling synchronization means 56 outputs a sampling signal SS that advances the sampling timing SP by the corresponding period of the synchronization error Tdiff. When both the sampling synchronization means 56A and the sampling synchronization means 56B operate simultaneously, the sampling timings SP may vary simultaneously according to the respective sampling signals SS, resulting in instability in the sampling operation. Therefore, in this embodiment, only the sampling synchronization means 56B of the second protection control monitoring device 100B operates, and the sampling timing SP of the first protection control monitoring device 100A is kept fixed.

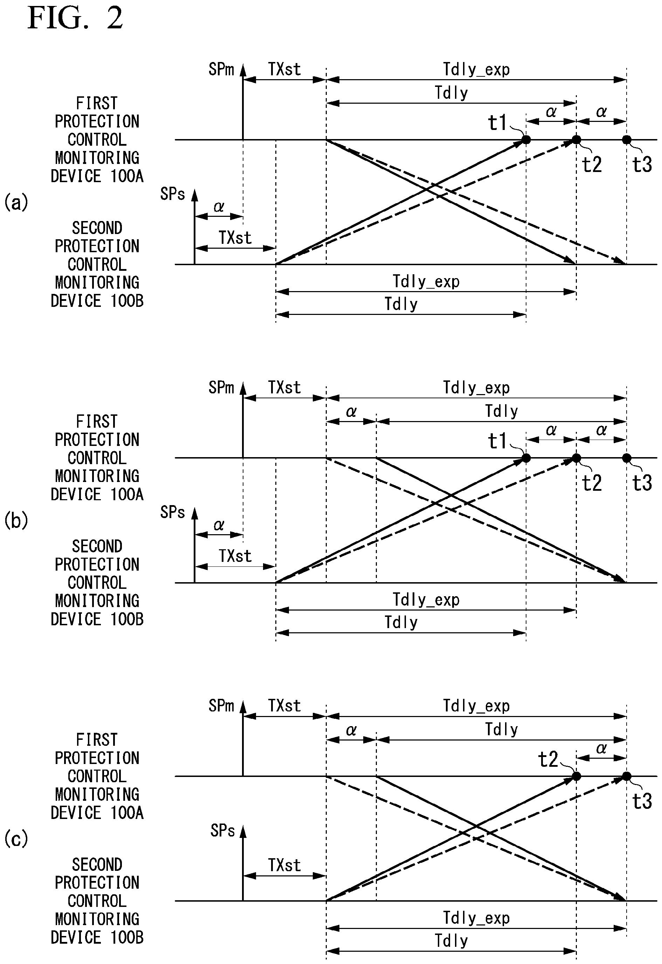

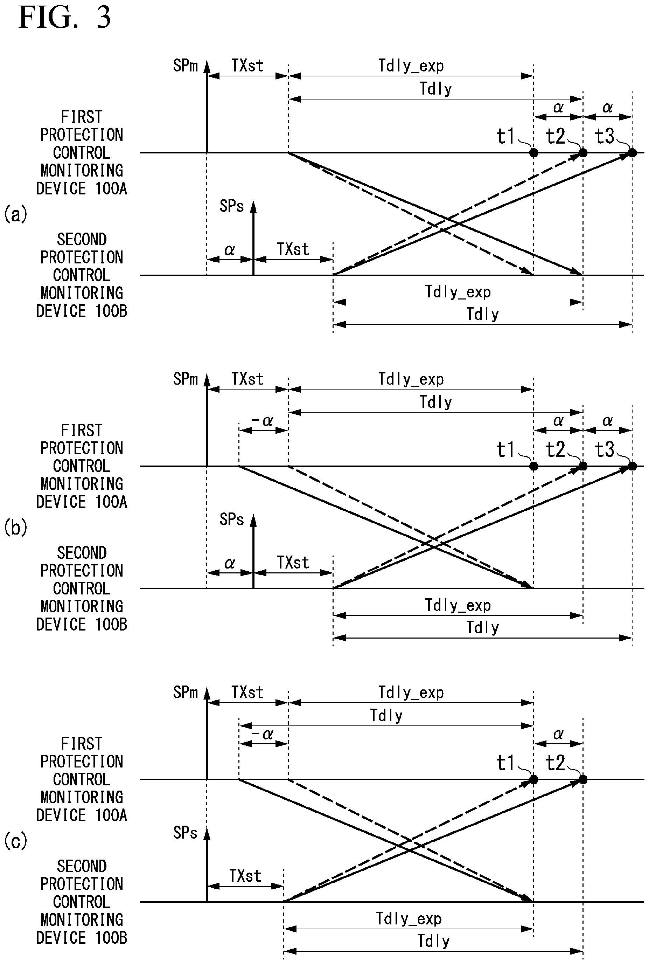

The transmission timing control means 58 sets the transmission standby time TXst, which is the time from when the A/D conversion unit 20 performs sampling until the acquired sampling data is transmitted from the transmission processing unit 40 to the other protection control monitoring device 100. Typically, the transmission standby time TXst is set to a common value between the first protection control monitoring device 100A and the second protection control monitoring device 100B. However, in the first embodiment, as described later, the transmission timing control means 58A corrects the transmission standby time TXst based on the time difference between the timing of receiving sampling data transmitted from the second protection control monitoring device 100B, which is measured by the measuring means 52A, and the timing of receiving data transmitted from the first protection control monitoring device 100 A by the second protection control monitoring device 100B, which is expected by the first protection control monitoring device 100A. The specific operation of the transmission timing control means 58 is described with reference to FIG. 2 and FIG. 3.

FIG. 2 is a diagram illustrating an example of a flow of operations of the transmission timing control means 58A and the sampling synchronization means 56B in a case where an expected transmission delay time Tdly_exp is longer than an actual transmission delay time Tdly. FIG. 2(a) illustrates an attempt by the slave sampling synchronization means 56B to synchronize the sampling timing SPs of the second protection control monitoring device 100B with the sampling timing SPm of the master first protection control monitoring device 100A, but due to the expected transmission delay time Tdly_exp being α units longer than the actual transmission delay time Tdly, the sampling timing SPs is deviating forward by α units compared to the sampling timing SPm. That is, from the perspective of the second protection control monitoring device 100B, at a time t2 in FIG. 2(a), it expects that the sampling data transmitted from the second protection control monitoring device 100B arrives at the first protection control monitoring device 100A, and simultaneously, it receives the sampling data transmitted from the first protection control monitoring device 100A. As a result, the second protection control monitoring device 100B mistakenly recognizes that Tdly_exp=Tdly is true, and the sampling synchronization means 56B has set the sampling timing SPs at a position deviating forward by α units compared to the sampling timing SPm.

On the other hand, the measuring means 52A measures, at the time t1 in FIG. 2(a), reception of the sampling data transmitted from the second protection control monitoring device 100B. At this time, the first protection control monitoring device 100A expects that the sampling data it sent to the second protection control monitoring device 100B will arrive at the second protection control monitoring device 100B at the time t3 in FIG. 2(a). As a result, the synchronization error detection means 54A recognizes that there is a deviation in the reception timing corresponding to the time interval between t3 and t1 (=2α), and detects the synchronization error Tdiff=Tdly_exp-Tdly=α. This is because, as mentioned earlier, in the first embodiment, where the uplink and downlink transmission delay times are assumed to be the same for a transmission path, the synchronization error detection means 54Acan identify, as the synchronization error, α which is half of the time interval 2α.

After the synchronization error detection means 54A detects the synchronization error α, the transmission timing control means 58A resets the transmission standby time TXst to TXst+α. FIG. 2(b) illustrates a situation where the transmission timing control means 58A has reset the transmission standby time TXst to TXst+α, and the first protection control monitoring device 100A is transmitting sampling data. At this time, from the perspective of the second protection control monitoring device 100B, at the time t2 in FIG. 2(b), it assumes that the sampling data transmitted from the second protection control monitoring device 100B arrives at the first protection control monitoring device 100A, and simultaneously, it receives the sampling data transmitted from the first protection control monitoring device 100A at the time t3 in FIG. 2(b). As a result, the synchronization error detection means 54B detects that a synchronization error corresponding to the time interval between t3 and t2 (=α) has occurred, and the sampling synchronization means 56B delays the sampling timing SPs by α. With the processing described above, as illustrated in FIG. 2(c), the sampling timing SPm and the sampling timing SPs match, and it is possible to achieve sampling synchronization between the first protection control monitoring device 100A and the second protection control monitoring device 100B.

FIG. 3 is a diagram illustrating an example of a flow of operations of the transmission timing control means 58A and the sampling synchronization means 56B in a case where the expected transmission delay time Tdly_exp is shorter than the actual transmission delay time Tdly. FIG. 3(a) illustrates an attempt by the slave sampling synchronization means 56B to synchronize the sampling timing SPs of the second protection control monitoring device 100B with the sampling timing SPm, but due to the expected transmission delay time Tdly_exp being α units shorter than the actual transmission delay time Tdly, the sampling timing SPs is deviating backward by α units compared to the sampling timing SPm. That is, from the perspective of the second protection control monitoring device 100B, at a time t2 in FIG. 3(a), it expects that the sampling data transmitted from the second protection control monitoring device 100B arrives at the first protection control monitoring device 100A, and simultaneously, it receives the sampling data transmitted from the first protection control monitoring device 100A. As a result, the second protection control monitoring device 100B mistakenly recognizes that Tdly_exp=Tdly is true, and the sampling synchronization means 56B has set the sampling timing SPs at a position deviating backward by α units compared to the sampling timing SPm.

On the other hand, the measuring means 52A measures, at the time t3 in FIG. 3(a), reception of the sampling data transmitted from the second protection control monitoring device 100B. At this time, the first protection control monitoring device 100A expects that the sampling data it sent to the second protection control monitoring device 100B will arrive at the second protection control monitoring device 100B at the time t1 in FIG. 3(a). As a result, the synchronization error detection means 54A recognizes that there is a deviation in the reception timing corresponding to the time interval between t1 and t3 (=2α), and detects the synchronization error Tdiff=Tdly_exp-Tdly=-α.

After the synchronization error detection means 54A detects the synchronization error -α, the transmission timing control means 58A resets the transmission standby time TXst to TXst-α. FIG. 2(b) illustrates a situation where the transmission timing control means 58A has reset the transmission standby time TXst to TXst-α, and the first protection control monitoring device 100A is transmitting sampling data. At this time, from the perspective of the second protection control monitoring device 100B, at the time t2 in FIG. 2(b), it assumes that the sampling data transmitted from the second protection control monitoring device 100B arrives at the first protection control monitoring device 100A, and simultaneously, it receives the sampling data transmitted from the first protection control monitoring device 100A at the time t1 in FIG. 2(b). As a result, the synchronization error detection means 54B detects that a synchronization error corresponding to the time interval between t1 and t3 (=-α) has occurred, and the sampling synchronization means 56B advances the sampling timing SPs by α. With the processing described above, as illustrated in FIG. 3(c), the sampling timing SPm and the sampling timing SPs match, and it is possible to achieve sampling synchronization between the first protection control monitoring device 100A and the second protection control monitoring device 100B.

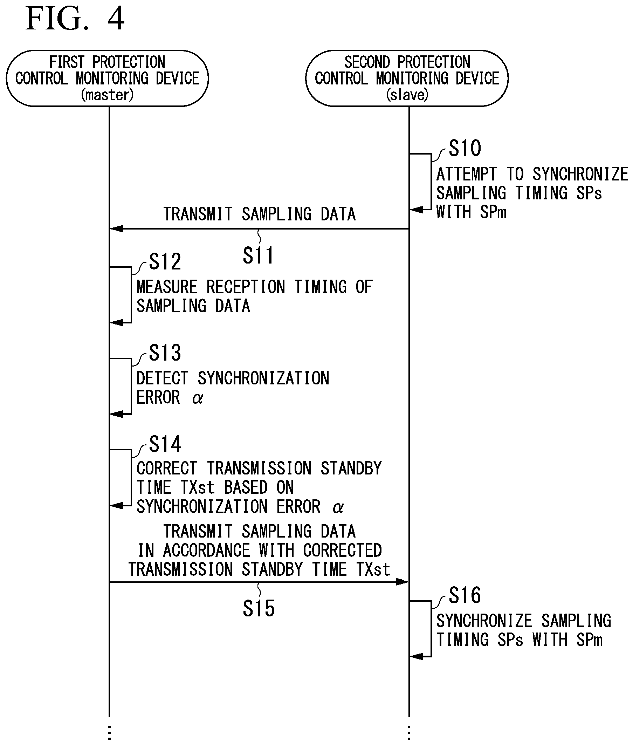

FIG. 4 is a timing chart illustrating an example of a flow of processing to be executed by the first protection control monitoring device 100A and the second protection control monitoring device 100B in the first embodiment. First, the sampling synchronization means 56B of the second protection control monitoring device 100B attempts to synchronize the sampling timing SPs with the sampling timing SPm by outputting to the A/D conversion unit 20B a sampling signal SS that resolves the synchronization error Tdiff detected by the synchronization error detection means 54B (Step S10). At this point, if the apparent synchronization error detected by the synchronization error detection means 54B matches the true synchronization error, the processing in Step S10 results in the sampling timing SPs matching the sampling timing SPm. However, as shown in FIG. 2(a) and FIG. 3(a), if the apparent synchronization error does not match the true synchronization error, the sampling timing SPs deviates from the sampling timing SPm.

Next, the transmission processing unit 40B transmits the sampling data obtained at the sampling timing SPs set by the sampling synchronization means 56B to the first protection control monitoring device 100A (Step S11). Next, the measuring means 52A measures the timing of receiving the sampling data received from the second protection control monitoring device 100B (Step S12). Next, the synchronization error detection means 54A detects the synchronization error α based on the time difference between the reception timing measured by the measuring means 52A and the timing of receiving data transmitted from the first protection control monitoring device 100A by the second protection control monitoring device 100B, which is expected by the first protection control monitoring device 100A (Step S13).

Next, the transmission timing control means 58A corrects the transmission standby time TXst based on the synchronization error α detected by the synchronization error detection means 54A (Step S14). Next, the transmission processing unit 40A transmits the sampling data to the second protection control monitoring device 100B according to the transmission standby time TXst corrected by the transmission timing control means 58A (Step S15). Next, when the measuring means 52B receives the sampled data from the first protection control monitoring device 100A, the synchronization error detection means 54B detects the synchronization error α, and the sampling synchronization means 56B outputs to the A/D conversion unit 20B a sampling signal SS that resolves the synchronization error α detected by the synchronization error detection means 54B, thereby synchronizing the sampling timing SPs with the sampling timing SPm (Step S16). Unlike the processing in Step S10, the processing in Step S16 is executed after the master first protection control monitoring device 100A has detected the synchronization error α and corrected the transmission standby time TXst. Therefore, the synchronization error detection means 54B can recognize the true synchronization error, achieving sampling synchronization between the first protection control monitoring device 100A and the second protection control monitoring device 100B.

According to the first embodiment, contrary to conventional techniques that achieve sampling synchronization by mutually transmitting reception timing information of sampling data, the first protection control monitoring device 100A and the second protection control monitoring device 100B do not mutually transmit sampling data reception timing information, and the first protection control monitoring device 100A detects the synchronization error α and controls the transmission timing of the sampling data, thereby achieving sampling synchronization. In other words, it is possible to perform sampling synchronization even in transmission paths with limited data transmission capacity.

### (Second Embodiment)

In the first embodiment, when the synchronization error detection means 54A detects the synchronization error α, the transmission timing control means 58A corrects the transmission standby time TXst directly based on the detected synchronization error α. However, for instance, during a transient state when the sampling synchronization means 56B is attempting to synchronize the sampling timing SPs with the sampling timing SPm, as in Step S10 in FIG. 4, there can be significant variations in the synchronization error α detected by the synchronization error detection means 54A. In such situations, the transmission timing control means 58A would frequently correct the transmission standby time TXst, and consequently, the sampling synchronization means 56B would frequently move the sampling timing SPs. This can result in unstable operation of the first protection control monitoring device 100 A and the second protection control monitoring device 100B. The second embodiment addresses these problems. The functional configuration of the first protection control monitoring device 100A and the second protection control monitoring device 100B is similar to the functional configuration of the first embodiment shown in FIG. 1, and thus description thereof is omitted here.

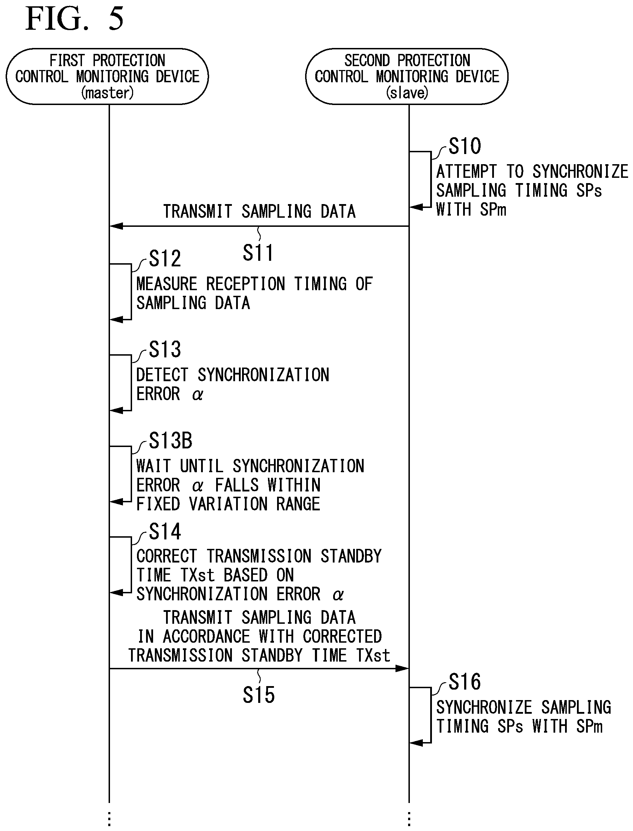

FIG. 5 is a timing chart illustrating an example of a flow of processing to be executed by the first protection control monitoring device 100A and the second protection control monitoring device 100B in a second embodiment. The details of processing from Step S10 to Step S13 are similar to those of the first embodiment illustrated in FIG. 4, and thus description thereof is omitted here.

In Step S13B, the transmission timing control means 58A, upon detecting the synchronization error α by the synchronization error detection means 54A, determines whether this synchronization error α falls within a fixed variation range. Specifically, the transmission timing control means 58A compares the synchronization error α1 previously detected at the last sampling cycle with the synchronization error α2 detected at the current cycle, and determines whether or not the difference |α1-α2| is within a fixed variation range. The fixed variation range can be determined, for example, by checking if |α1-α2|≤|α1| is satisfied. Alternatively, in a more general approach, the transmission timing control means 58A may calculate statistical values (e.g., moving averages) of the detected synchronization errors α1, α2, ..., αN over a specified number of sampling cycles, and determine whether these statistical values meet certain criteria (e.g., whether the standard deviation is within σ) to determine if the synchronization error α falls within a fixed variation range. If the transmission timing control means 58A determines that the synchronization error α is within a fixed variation range, it adjusts the transmission standby time TXst based on this synchronization error α (Step S14). The subsequent processes are similar to the timing chart in Figure 4, and thus description thereof is omitted here.

According to the second embodiment, the transmission timing control means 58A determines whether the synchronization error α detected by the synchronization error detection means 54A falls within a fixed variation range, and if the synchronization error α falls within the fixed variation range, corrects the transmission standby time TXst. As a result, it is possible to achieve sampling synchronization while stabilizing operations of the first protection control monitoring device 100 A and the second protection control monitoring device 100B.

### (Third Embodiment)

In the first and second embodiments, the first protection control monitoring device 100A serves as the master for controlling the transmission timing of the sampling data, while the second protection control monitoring device 100B serves as a slave for correcting the sampling timing. Specifically, since the first protection control monitoring device 100A does not correct the sampling timing SPm in synchronization with the second protection control monitoring device 100B, the first protection control monitoring device 100A can serve as a master for a plurality of protection control monitoring devices. The third embodiment is designed to implement such features.

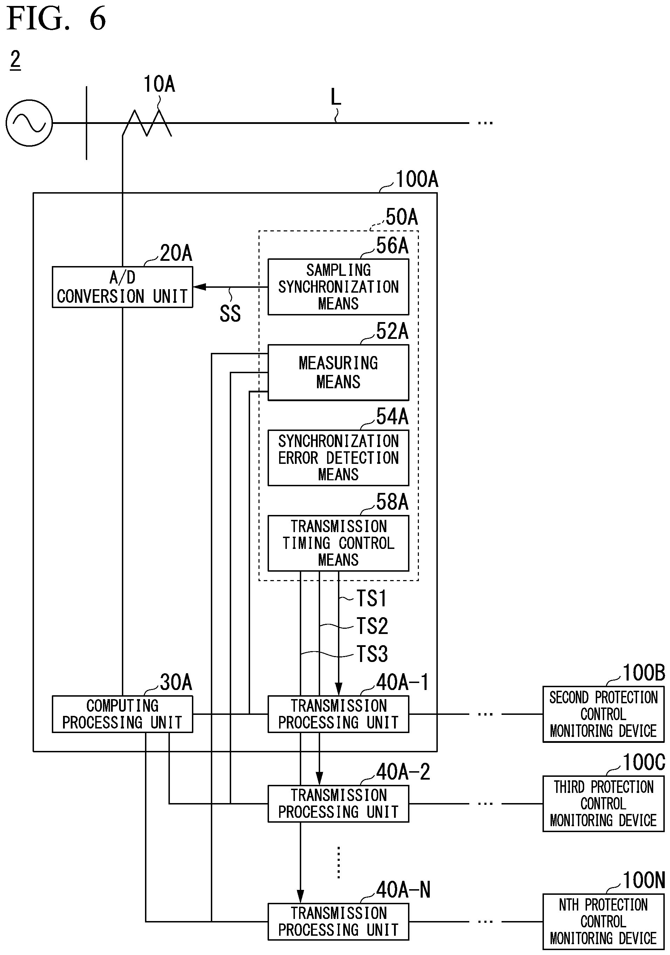

FIG. 6 is a configuration diagram of a protection control monitoring system 2 according to the third embodiment. Unlike the protection control monitoring system 1 of the first embodiment shown in FIG. 1, the protection control monitoring system 2 includes not only the second protection control monitoring device 100B but also a third protection control monitoring device 100C, ..., and an Nth protection control monitoring device 100N (where N is any integer greater than or equal to 3). The first protection control monitoring device 100A, in place of the transmission processing unit 40A, comprises transmission processing units 40A-1, 40A-2, ..., up to 40A-N. These transmission processing units (40A-1, 40A-2, ..., 40A-N) exchange sampling data with the first protection control monitoring device 100A, the second protection control monitoring device 100B, the third protection control monitoring device 100C, ..., and the Nth protection control monitoring device 100N, respectively.

Similar to the first embodiment, the synchronization error detection means 54A detects synchronization errors α1, α2, ..., αN for the second protection control monitoring device 100B, the third protection control monitoring device 100C, ..., and the Nth protection control monitoring device 100N, respectively. The transmission timing control means 58A uses the detected synchronization errors α1, α2, ..., αN to correct the transmission standby times TXst_1, TXst_2, ..., TXst_N for the pieces of sampling data transmitted from the transmission processing unit 40A-1, the transmission processing unit 40A-2, ..., and the transmission processing unit 40A-N, respectively. Then, the sampling synchronization means 56B, sampling synchronization means 56C, ..., sampling synchronization means 56N of the second protection control monitoring device 100B, the third protection control monitoring device 100C, ..., and the Nth protection control monitoring device 100N respectively adjust the sampling timings based on the corresponding synchronization errors α1, α2, ..., αN. This enables sampling synchronization with the master first protection control monitoring device 100A.

According to the third embodiment, the master protection control monitoring device independently controls the transmission timings of the sampling data based on the synchronization errors detected for a plurality of slave protection control monitoring devices, and the plurality of slave protection control monitoring devices synchronizes its own sampling timing with the sampling timing of the master protection control monitoring device. This enables sampling synchronization among a plurality of protection control monitoring devices.

### (Fourth Embodiment)

The first to third embodiments are applicable to a transmission path where the upstream transmission delay time and downstream transmission delay time are the same. On the other hand, the approach of having the master protection control monitoring device control the transmission timing of the sampling data to achieve sampling synchronization is also applicable to a transmission path where the upstream transmission delay time (Td_up) and downstream transmission delay time (Td_down) are different. The fourth embodiment applies the present invention to a transmission path where the upstream transmission delay time (Td_up) and downstream transmission delay time (Td_down) are different. The functional configuration of the fourth embodiment is similar to that of the first embodiment shown in FIG. 1, and thus description thereof is omitted here. Further, in the fourth embodiment, it is assumed that information regarding the difference in transmission delay time (Td_down-Td_up) between the upstream transmission delay time Td_up and the downstream transmission delay time Td_down is preset in the first protection control monitoring device 100A.

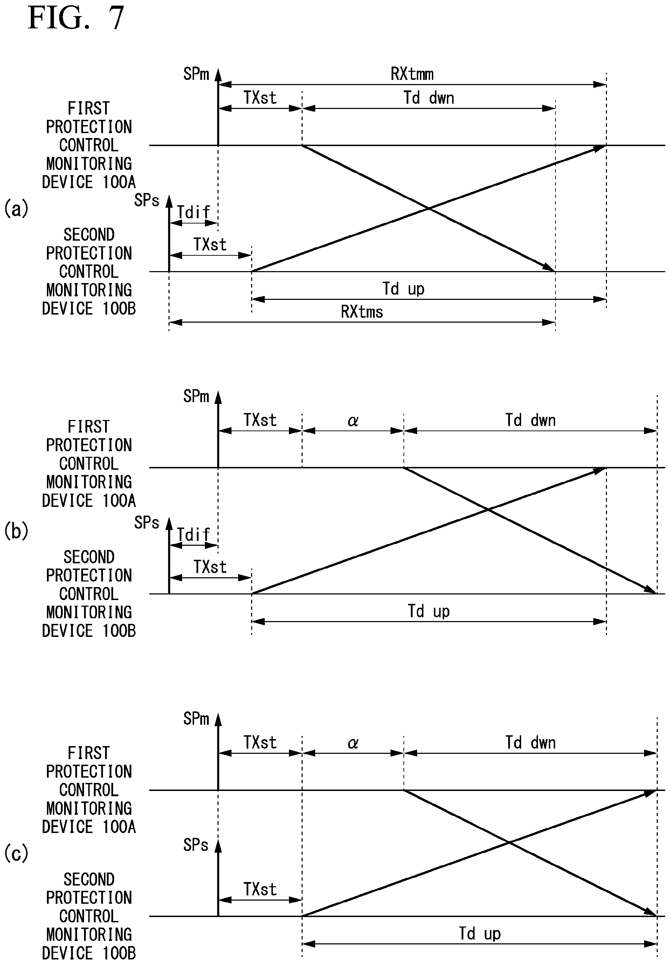

FIG. 7 is a diagram illustrating an example of a flow of operations of the transmission timing control means 58A and the sampling synchronization means 56B in a case where the upstream transmission delay time Td_up is longer than the downstream transmission delay time Td_down. In this embodiment, the transmission processing unit 40 includes, in sampling data, the reception timing information RXtm of sampling data received from the other protection control monitoring device 100, and transmit the sampling data to the other protection control monitoring device 100. The reception timing information RXtm represents information indicating a time from when the protection control monitoring device 100 executes sampling in a particular sampling cycle until it receives sampling data transmitted by the other protection control monitoring device 100 in the same sampling cycle. More specifically, as illustrated in FIG. 7(a), for the upstream transmission delay time RXtmm, RXtmm=TXst+Td_up-Tdif holds, and for the downstream transmission delay time RXtms, RXtms=TXst+Td_down+Tdif holds.

In FIG. 7(a), first, the measuring means 52A acquires the reception timing information RXtms included in the sampling data transmitted from the second protection control monitoring device 100B. On the other hand, the first protection control monitoring device 100A holds the reception timing information RXtmm corresponding to that sampling data. Next, the synchronization error detection means 54A calculates RXtms-RXtmm=TXst+Td_down+Tdif-(TXst+Td_up-Tdif)=Td_down-Td_up+2Tdif. Here, RXtms-RXtmm is a value calculable from reception timing information, and Td_down-Td_up is a known value from the assumption mentioned earlier. That is, the synchronization error detection means 54A can calculate the synchronization error Tdiff by Tdif={(RXtms-RXtmm)-(Td_down-Td_up)}/2.

Next, as shown in FIG. 7(b), the transmission timing control means 58A delays the transmission standby time TXst by α units, precisely, Tdif × 2. In other words, the transmission timing control means 58Aresets the transmission standby time TXst to transmission standby time TXst+α. Then, as shown in FIG. 7(c), the sampling synchronization means 56B recognizes that the reception timing information RXtmm included in the sampled data transmitted from the first protection control monitoring device 100A has been delayed by α units. The sampling synchronization means 56B delays the sampling timing SPs by the period corresponding to α/2=Tdif. As a result, the sampling timing SPs matches the sampling timing SPm.

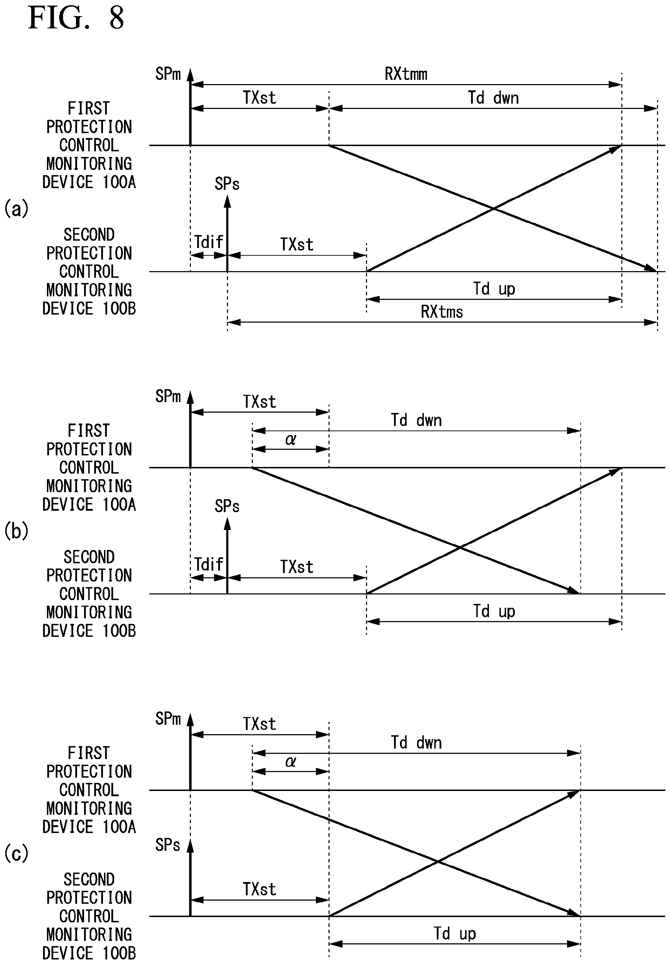

FIG. 8 is a diagram illustrating an example of a flow of operations of the transmission timing control means 58A and the sampling synchronization means 56B in a case where the upstream transmission delay time Td_up is shorter than the downstream transmission delay time Td_down. As illustrated in FIG. 8(a), for the upstream transmission delay time RXtmm, RXtmm=TXst+Td_up-Tdif holds, and for the downstream transmission delay time RXtms, RXtms=TXst+Td_down+Tdif holds.

In FIG. 8(a), first, the measuring means 52A acquires the reception timing information RXtms included in the sampling data transmitted from the second protection control monitoring device 100B. On the other hand, the first protection control monitoring device 100A holds the reception timing information RXtmm corresponding to that sampling data. Next, the synchronization error detection means 54A calculates RXtms-RXtmm=TXst+Td_down-Tdif-(TXst+Td_up+Tdif)=Td_down-Td_up-2Tdif. Here, RXtms-RXtmm is a value calculable from reception timing information, and Td_down-Td_up is a known value from the assumption mentioned earlier. That is, the synchronization error detection means 54A can calculate the synchronization error Tdiff by Tdif={(Td_down-Td_up)-(RXtms-RXtmm)}/2.

Next, as shown in FIG. 8(b), the transmission timing control means 58A delays the transmission standby time TXst by α units, precisely, Tdif × 2. In other words, the transmission timing control means 58Aresets the transmission standby time TXst to transmission standby time TXst-α. Then, as shown in FIG. 8(c), the sampling synchronization means 56B recognizes that the reception timing information RXtmm included in the sampled data transmitted from the first protection control monitoring device 100A has advanced by α units. The sampling synchronization means 56B advances the sampling timing SPs by the period corresponding to α/2=Tdif As a result, the sampling timing SPs matches the sampling timing SPm.

According to the fourth embodiment, contrary to conventional techniques that achieve sampling synchronization by setting information regarding the difference in transmission delay time in both of the master protection control monitoring device and the slave protection control monitoring device, the information regarding the difference in transmission delay time is set in only the master protection control monitoring device, and the protection control monitoring device achieves sampling synchronization by controlling the transmission timing of the sampling data based on the set difference in transmission delay time and the reception timing information. As a result, it is possible to save the labor and cost of setting information regarding the difference in transmission delay time in a plurality of protection control monitoring devices.

### (Fifth Embodiment)

In the fourth embodiment, the first protection control monitoring device 100A serves as a master for controlling the transmission timing of the sampling data, while the second protection control monitoring device 100B serves as a slave for correcting the sampling timing. Specifically, since the first protection control monitoring device 100A does not correct the sampling timing SPm in synchronization with the second protection control monitoring device 100B, the first protection control monitoring device 100A can serve as a master for a plurality of protection control monitoring devices. The fifth embodiment is designed to implement such features. The functional configuration of the fifth embodiment is similar to the functional configuration of the third embodiment shown in FIG. 6, and thus description thereof is omitted here. Further, similarly to the fourth embodiment, it is assumed that information regarding the difference in transmission delay time (Td_down-Td_up) between the upstream transmission delay time Td_up and the downstream transmission delay time Td_down is preset in the first protection control monitoring device 100A for each of the second protection control monitoring device 100B, third protection control monitoring device 100C, ..., up to the Nth protection control monitoring device 100N.

The synchronization error detection means 54A calculates the synchronization error Tdiff for each of the second protection control monitoring device 100B, the third protection control monitoring device 100C, ..., up to the Nth protection control monitoring device 100N based on the preset transmission delay time difference Td_down-Td_up and the reception timing information RXtms transmitted from each of the second protection control monitoring device 100B, the third protection control monitoring device 100C, ..., up to the Nth protection control monitoring device 100N. Next, the transmission timing control means 58A corrects the transmission standby times TXst_1, TXst_2, ..., TXst_N of the sampling data transmitted from the transmission processing units 40A-1, 40A-2, ..., 40A-N based on the calculated synchronization error Tdiff for each of these units. Accordingly, the sampling synchronization means 56B, 56C, ..., 56N of the second protection control monitoring device 100B, the third protection control monitoring device 100C, ..., up to the Nth protection control monitoring device 100N correct the sampling timing, and this correction allows them to achieve sampling synchronization with the master first protection control monitoring device 100A.

According to the fifth embodiment, the master protection control monitoring device independently controls the transmission timings of the sampling data based on the synchronization errors calculated for a plurality of slave protection control monitoring devices, and the plurality of slave protection control monitoring devices synchronize their own sampling timing with the sampling timing of the master protection control monitoring device. This achieves sampling synchronization among a plurality of protection control monitoring devices without the need to manually set information regarding the transmission delay time difference in each of the plurality of protection control monitoring device.

### (Sixth Embodiment)

The fourth embodiment involves the transmission timing control means 58A controlling the transmission timing of the sampling data based on the synchronization error detected by the synchronization error detection means 54A. However, the present invention is not limited to such a configuration. In a sixth embodiment, for example, the first protection control monitoring device 100A may correct the reception timing information to be notified to the second protection control monitoring device 100B without changing the transmission timing of the sampling data. The other configurations are similar to those of the fourth embodiment, and description thereof is omitted here.

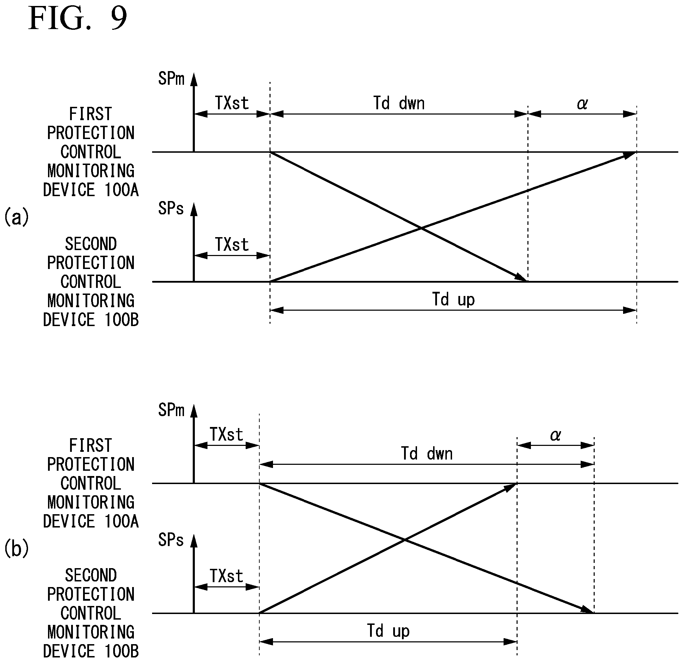

FIG. 9 is diagram for describing a method of achieving sampling synchronization by correcting reception timing information to be notified to the second protection control monitoring device 100B by the first protection control monitoring device 100A. FIG. 9(a) illustrates correction of the reception timing information in a case where the upstream transmission delay time is longer than the downstream transmission delay time, whereas FIG. 9(b) illustrates correction of the reception timing information in a case where the upstream transmission delay time is shorter than the downstream transmission delay time. In the case of FIG. 9(a), the first protection control monitoring device 100A notifies the second protection control monitoring device 100B of the reception timing information RXtmm+α obtained by adding α units to the value of the reception timing information RXtmm to be notified to the second protection control monitoring device 100B instead of correcting the transmission standby time TXst by Tdif×2=α units. The second protection control monitoring device 100B recognizes that the reception timing information RXtmm included in the sampling data transmitted from the first protection control monitoring device 100A is delayed by α units, and delays the sampling timing SPs by a period corresponding to α/2=Tdif, which achieves sampling synchronization. In the case of FIG. 9(b), instead of correcting the transmission standby time TXst by Tdif×2=α units, the first protection control monitoring device 100A notifies the second protection control monitoring device 100B of the reception timing information RXtmm-α obtained by subtracting α units from the value of the reception timing information RXtmm to be notified to the second protection control monitoring device 100B. The second protection control monitoring device 100B recognizes that the reception timing information RXtmm included in the sampling data transmitted from the first protection control monitoring device 100A has advanced by α units, and advances the sampling timing SPs by a period corresponding to α/2=Tdif, which achieves sampling synchronization.

According to the sixth embodiment, it is possible to achieve sampling synchronization with simple processing involving changing details of reception timing information to be notified to the second protection control monitoring device 100B without controlling the transmission timing of sampling data by the transmission timing control means 58A.

### (Seventh Embodiment)

In the sixth embodiment, the first protection control monitoring device 100A serves as a master for controlling the reception timing information, while the second protection control monitoring device 100B serves as a slave for correcting the sampling timing. Specifically, since the first protection control monitoring device 100A does not correct the sampling timing SPm in synchronization with the second protection control monitoring device 100B, the first protection control monitoring device 100A can serve as a master for a plurality of protection control monitoring devices. The seventh embodiment is designed to implement such features. The functional configuration of the seventh embodiment is similar to the functional configuration of the fifth embodiment, and thus description thereof is omitted here.

The synchronization error detection means 54A calculates the synchronization error Tdiff for each of the second protection control monitoring device 100B, the third protection control monitoring device 100C, ..., up to the Nth protection control monitoring device 100N based on the preset transmission delay time difference Td_down-Td_up and the reception timing information RXtms transmitted from each of the second protection control monitoring device 100B, the third protection control monitoring device 100C, ..., up to the Nth protection control monitoring device 100N. Next, the transmission processing units 40A-1, 40A-2, ..., 40A-N notify the second protection control monitoring device 100B, the third protection control monitoring device 100C, ..., up to the Nth protection control monitoring device 100N of the reception timing information RXtmm+α obtained by adding Tdif×2=α units to the values of the reception timing information to be notified to the second protection control monitoring device 100B, the third protection control monitoring device 100C, ..., up to the Nth protection control monitoring device 100N based on the calculated synchronization errors Tdiff. Then, the sampling synchronization means 56B, 56C, ..., 56N of the second protection control monitoring device 100B, the third protection control monitoring device 100C, ..., up to the Nth protection control monitoring device 100N correct the sampling timing, which enables sampling synchronization with the master first protection control monitoring device 100A.

According to the seventh embodiment, contrary to conventional techniques that achieve sampling synchronization by setting information regarding the difference in transmission delay time in both of the master protection control monitoring device and the slave protection control monitoring device, the information regarding the difference in transmission delay time is set in only the master protection control monitoring device, and the protection control monitoring device achieves sampling synchronization by changing the details of the reception timing information to be notified to the other protection control monitoring devices. As a result, it is possible to achieve sampling synchronization with simple processing while saving the labor and cost of setting information regarding the difference in transmission delay time in a plurality of protection control monitoring devices.

### (Eighth Embodiment)

The first to seventh embodiments relate to cases where the sampling synchronization means 56 of the protection control monitoring device 100 achives sampling synchronization solely through the transmission path. However, the present invention is not limited to such configurations. The seventh embodiment relates to a situation where the sampling synchronization means 56 of the protection control monitoring device 100 achieves sampling synchronization through an external time synchronization source.

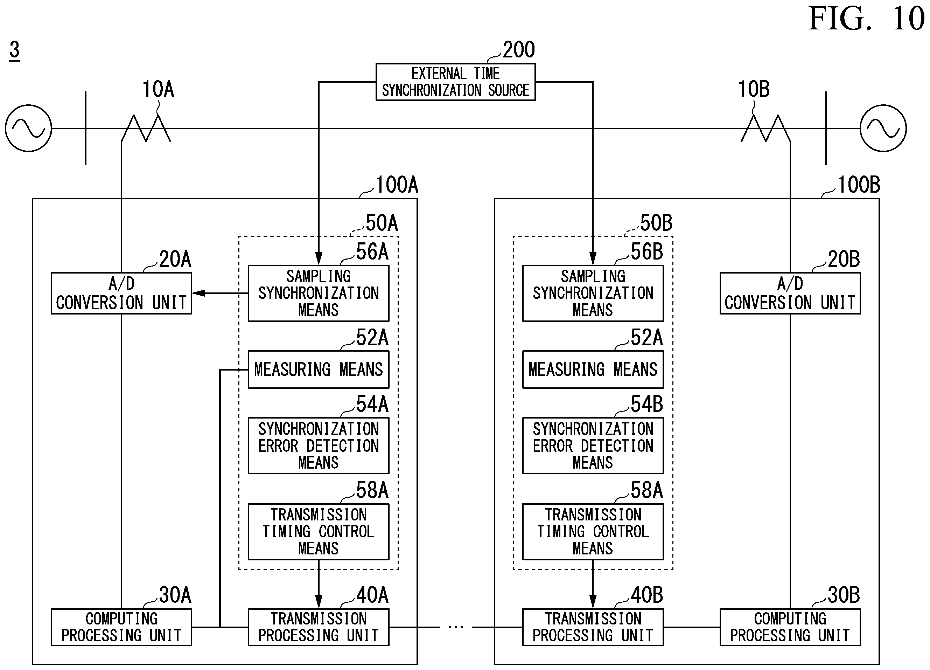

FIG. 10 is a configuration diagram of a protection control monitoring system 3 according to an eight embodiment. As shown in FIG. 10, the sampling synchronization means 56A and the sampling synchronization means 56B achieve sampling synchronization based on sampling synchronization signals from an external time synchronization source 200, such as GPS satellites. The other configurations are similar to the functional configuration shown in FIG. 1, and thus description thereof is omitted here.

If the sampling synchronization means 56A or the sampling synchronization means 56B fails to acquire a sampling synchronization signal from the external time synchronization source 200, the sampling synchronization means 56A or the sampling synchronization means 56B use the methods described in the first embodiment, the fourth embodiment, or the sixth embodiment to achieve sampling synchronization through the transmission path. Specifically, in cases where the transmission capacity of the transmission path between the sampling synchronization means 56A and the sampling synchronization means 56B is low, the first protection control monitoring device 100A can detect a synchronization error with the second protection control monitoring device 100B without using reception timing information, and achieve sampling synchronization by controlling the transmission timing of the sampling data based on the synchronization error. Moreover, when the transmission capacity of the transmission path between the sampling synchronization means 56A and the sampling synchronization means 56B is not low and information regarding the transmission delay time difference with the second protection control monitoring device 100B is set in the first protection control monitoring device 100A, the first protection control monitoring device 100A can detect a synchronization error by using both the reception timing information and the information regarding the transmission delay time difference, and achieve sampling synchronization by controlling the transmission timing of the sampling data or correcting the reception timing information to be transmitted to the second protection control monitoring device 100B based on the synchronization error.

According to the eighth embodiment, even when a plurality of protection control monitoring devices are performing sampling synchronization through an external time synchronization source, if there is any malfunction in the external time synchronization source, they can still achieve sampling synchronization through the transmission path.

While several embodiments of the present invention have been described, these embodiments are presented as examples, and it is not intended to limit the scope of the invention. These embodiments can be implemented in various other forms, and within the spirit of the invention, various omissions, substitutions, and modifications can be made without departing from the scope of the invention. These embodiments and their variations are included within the scope and spirit of the invention, as well as within the scope of the claims of the patent.

## Claims

1. A protection control monitoring system, comprising:
a first protection control monitoring device including a measurement unit that measures a timing of receiving data transmitted from a communication partner, and an adjustment unit that adjusts a transmission timing for transmitting data to the communication partner; and
a second protection control monitoring device including a measurement unit that measures a timing of receiving data transmitted from a communication partner, and a correction unit that corrects a sampling timing of data,
wherein the adjustment unit of the first protection control monitoring device adjusts the transmission timing based on a time difference between the timing of receiving data transmitted from the second protection control monitoring device, which is measured by the measurement unit of the first protection control monitoring device, and a timing of receiving data transmitted from the first protection control monitoring device by the second protection control monitoring device, which is expected by the first protection control monitoring device, and
wherein the correction unit of the second protection control monitoring device corrects the sampling timing after the adjustment unit of the first protection control monitoring device has adjusted the transmission timing, to achieve sampling synchronization between the first protection control monitoring device and the second protection control monitoring device.

2. The protection control monitoring system according to claim 1,
wherein the adjustment unit of the first protection control monitoring device adjusts the transmission timing if the timing of receiving data transmitted from the second protection control monitoring device, which is measured by the measurement unit of the first protection control monitoring device, falls within a fixed variation range.

3. The protection control monitoring system according to claim 1 or 2, further comprising a plurality of second protection control monitoring devices, wherein the adjustment unit of the first protection control monitoring device independently adjusts the plurality of transmission timings for the plurality of second protection control monitoring devices.

4. The protection control monitoring system according to any one of claims 1 to 3, wherein data transmitted from the first protection control monitoring device to the second protection control monitoring device does not include information on a timing of receiving data transmitted from the first protection control monitoring device by the second protection control monitoring device, and data transmitted from the second protection control monitoring device to the first protection control monitoring device does not include information on a timing of receiving data transmitted from the second protection control monitoring device by the first protection control monitoring device.

5. A protection control monitoring system, comprising:
a first protection control monitoring device including a measurement unit that measures a timing of receiving data transmitted from a communication partner, a transmission unit that transmits data including the measured reception information, and an adjustment unit that adjusts a transmission timing for transmitting the data to the communication partner; and
a second protection control monitoring device including a measurement unit that measures a timing of receiving data transmitted from a communication partner, and a correction unit that corrects a sampling timing of data,
wherein the adjustment unit of the first protection control monitoring device adjusts the transmission timing based on a difference between an upstream transmission delay time and downstream transmission delay time of a transmission path of the first protection control monitoring device and the second protection control monitoring device, and
wherein the correction unit of the second protection control monitoring device corrects the sampling timing based on the reception timing information included in the data transmitted from the transmission unit of the first protection control monitoring device, to achieve sampling synchronization between the first protection control monitoring device and the second protection control monitoring device.

6. The protection control monitoring system according to claim 5, further comprising a plurality of second protection control monitoring devices, wherein the adjustment unit of the first protection control monitoring device independently adjusts the plurality of transmission timings for the plurality of second protection control monitoring devices.

7. A protection control monitoring system, comprising:
a first protection control monitoring device including at least a measurement unit that measures a timing of receiving data transmitted from a communication partner, a transmission unit that transmits data including the measured reception timing information, and an adjustment unit that adjusts the reception timing information included in the data to be transmitted to the communication partner; and
a second protection control monitoring device including at least a measurement unit that measures a timing of receiving data transmitted from a communication partner, and a correction unit that corrects a sampling timing of data,
wherein the adjustment unit of the first protection control monitoring device adjusts the reception timing information based on a difference between an upstream transmission delay time and downstream transmission delay time of a transmission path of the first protection control monitoring device and the second protection control monitoring device, and
wherein the correction unit of the second protection control monitoring device corrects the sampling timing based on the reception timing information included in the data transmitted from the transmission unit of the first protection control monitoring device, to achieve sampling synchronization between the first protection control monitoring device and the second protection control monitoring device.

8. The protection control monitoring system according to claim 7, further comprising a plurality of second protection control monitoring devices, wherein the adjustment unit of the first protection control monitoring device independently adjusts the plurality of pieces of reception timing information for the plurality of second protection control monitoring devices.

9. The protection control monitoring system according to any one of claims 1 to 8,
wherein the first protection control monitoring device and the second protection control monitoring device are connected to a sampling synchronization source, and
wherein when at least one of the first protection control monitoring device and the second protection control monitoring device is disconnected from the sampling synchronization source, the first protection control monitoring device and the second protection control monitoring device executes the sampling synchronization.

10. A protection control monitoring device, comprising a measurement unit that measures a timing of receiving data transmitted from a communication partner, and an adjustment unit that adjusts a transmission timing for transmitting data to a communication partner,
wherein, to achieve sampling synchronization with a second protection control monitoring device including a measurement unit that measures a timing of receiving data transmitted from a communication partner, and a correction unit that corrects a sampling timing of data, the adjustment unit adjusts the transmission timing based on a time difference between the timing of receiving data transmitted from the second protection control monitoring device, which is measured by the measurement unit of the first protection control monitoring device, and a timing of receiving data transmitted from the protection control monitoring device by the second protection control monitoring device, which is expected by the protection control monitoring device.
